# EUROPEAN PATENT SPECIFICATION

(11) **EP 4 184 705 B1**
(45) Date of publication and mention of the grant of the patent: **07.05.2025**
(21) Application number: 21953017.7
(22) Date of filing: 30.09.2021
(51) Int. Cl.: H01M 50/548, H01M 50/176, H01M 50/531, H01M 50/564

(54) **BATTERY CELL, BATTERY, ELECTRICAL APPARATUS, AND MANUFACTURING METHOD AND DEVICE FOR BATTERY CELL**
BATTERIEZELLE, BATTERIE, ELEKTRISCHE VORRICHTUNG UND HERSTELLUNGSVERFAHREN UND -VORRICHTUNG FÜR BATTERIEZELLE
ÉLÉMENT DE BATTERIE, BATTERIE, APPAREIL ÉLECTRIQUE, ET PROCÉDÉ ET DISPOSITIF DE FABRICATION POUR ÉLÉMENT DE BATTERIE

(43) Date of publication of application: 24.05.2023
(73) Proprietor: Contemporary Amperex Technology (Hong Kong) Limited, Central, Central And Western District (HK)
(72) Inventor: XIAO, Haihe, Ningde Fujian 352100 (CN); ZHANG, Xiaowen, Ningde Fujian 352100 (CN); LIU, Qiang, Ningde Fujian 352100 (CN); LI, Baiqing, Ningde Fujian 352100 (CN); JIN, Haizu, Ningde Fujian 352100 (CN)
(74) Representative: Kraus & Lederer PartGmbB
(86) International application number: PCT/CN2021/121995
(87) International publication number: WO 2023/050246

(56) References cited:
- WO-A1-2019/186850
- CN-A- 105 789 493
- CN-A- 105 789 674
- CN-A- 111 886 715
- CN-A- 112 701 422
- CN-A- 113 113 738
- CN-U- 206 364 127
- DE-A1- 102018 204 592
- DE-A1- 102018 207 329
- US-A1- 2013 273 411
- US-A1- 2020 112 062

## Description

### TECHNICAL FIELD

This application relates to the field of battery technologies, and in particular, to a battery cell, a battery, an electric apparatus, and a manufacturing method and device of battery cell.

### BACKGROUND

Energy saving and emission reduction are crucial to the sustainable development of the automotive industry. Electric vehicles, with their advantages in energy saving and emission reduction, have become an important part of sustainable development of the automobile industry. For electric vehicles, battery technology is an important factor in connection with their development.

A battery cell includes a housing, an end cover, and an electrode assembly disposed in the housing, where the end cover is provided with a pole. During assembly of the battery cell, the electrode assembly needs to be placed into the housing and connected to the pole on the end cover, and then the end cover and the housing are welded to complete the assembly. It can be seen that the assembly procedures of the battery cell are complicated. US2013/273411A1, DE102018207329A1 and DE102018204592A1 disclose different cell assembly arrangements.

### SUMMARY

In view of the foregoing problem, this application provides a battery cell, a battery, an electric apparatus, and a manufacturing method and device of battery cell to simplify assembly of the battery cell.

The invention is defined in the appended claims.

According to a first aspect, this application provides a battery cell. The battery cell includes a housing, an electrode assembly, and a pole. The housing is integrally formed and includes two first side walls arranged opposite each other in a first direction and two second side walls arranged opposite each other in a second direction, the two first side walls and the two second side walls enclose an accommodating cavity, the housing has at least one opening in a third direction, and the first direction, the second direction, and the third direction are perpendicular to each other. The electrode assembly is accommodated in the accommodating cavity, and the electrode assembly includes a body portion and a tab protruding out of the body portion. The pole is disposed on the first side wall and electrically connected to the tab.

In the technical solution in this embodiment of this application, the pole is integrated and assembled on the side wall of the housing. In this way, the electrode assembly does not need to be connected to an end cover beforehand when being placed into the housing, which facilitates placement into the housing and simplifies assembly procedures of the battery cell. In addition, the pole of the battery cell is disposed on the first side wall, so that water cooling components can be arranged on upper and lower sides of the battery cell, which enlarges an area for arranging the water cooling components and improves heat dissipation performance of the battery.

In some embodiments, the housing further includes a bottom wall disposed opposite the opening, and the battery cell further includes an end cover, where the end cover is disposed at the opening to close the accommodating cavity. After the electrode assembly is placed in the housing, only one end cover needs to be welded to the housing to close the housing, which simplifies the assembly procedures of the battery cell compared with the need to weld two end covers in the prior art.

In some embodiments, the housing has two openings arranged opposite each other in the third direction, and the battery cell further includes two end covers, where the two end covers are correspondingly disposed at the two openings to close the accommodating cavity. The housing is run through in the third direction, and therefore it can be formed by one-time stretching, and a stretching forming process is simple.

In some embodiments, an area of the first side wall is smaller than an area of the second side wall. In this way, the second side wall of the housing and a larger surface of the electrode assembly are disposed in a same direction, and the first side wall of the housing is disposed in a same direction as a thickness direction of the electrode assembly, thereby facilitating placement of the electrode assembly into the housing.

In some embodiments, the pole is disposed on the first side wall through riveting or injection molding.

In the invention, the tab protrudes from the body portion to one side of the opening, and the battery cell further includes an adapting component, where the adapting component includes a first adapting piece and a second adapting piece that are disposed separately, the first adapting piece is configured to be connected to the pole, the second adapting piece is configured to be connected to the tab, the first adapting piece substantially extends along the third direction, the second adapting piece substantially extends along the first direction, and the first adapting piece is connected to the second adapting piece through a conductive structure. The adapting component is disposed as the first adapting piece and the second adapting piece that are disposed separately, so that during assembly, the first adapting piece may be connected to the pole in advance, and after the second adapting piece is connected to the tab of the electrode assembly, the electrode assembly is placed into the housing. In this case, end portions of the first adapting piece and the second adapting piece are connected through the conductive structure, thereby enabling placement of the electrode assembly into the housing. After the end portions of the first adapting piece and the second adapting piece are connected through the conductive structure, the end cover and the housing are welded for completing sealing of the battery cell.

In some embodiments, the first adapting piece includes a first body segment and a first connecting segment disposed at an end portion of the first body segment, where the first body segment is configured to be connected to the pole, the first body segment extends along the third direction, the first connecting segment extends along the first direction, and the first connecting segment is connected to the second adapting piece. A connecting area between the first adapting piece and the second adapting piece can be increased by disposing the first connecting segment, thereby facilitating connection.

In some embodiments, the second adapting piece includes a second body segment and a second connecting segment connected to the first connecting segment, where the second body segment is configured to be connected to the tab, and the first connecting segment extends, relative to the first body segment, toward a side approaching the second body segment; or the first connecting segment extends, relative to the first body segment, toward a side leaving the second body segment; or in the first direction, the first connecting segment extends toward two sides relative to the first body segment.

According to a second aspect, this application provides a battery, including the foregoing battery cell.

According to a third aspect, this application provides an electric apparatus, including the foregoing battery.

According to a fourth aspect, this application provides a manufacturing method of battery cell, including the following steps:
providing an integrally formed housing and a pole, where the housing includes two first side walls arranged opposite each other in a first direction and two second side walls arranged opposite each other in a second direction, the two first side walls and the two second side walls enclose an accommodating cavity, and the housing has at least one opening in a third direction;
providing an electrode assembly, where the electrode assembly includes a body portion and a tab protruding out of the body portion; and
disposing the pole on the first side wall, placing the electrode assembly in the accommodating cavity, and electrically connecting the tab to the pole.

In the invention, the tab of the electrode assembly protrudes from the body portion to one side of the opening, and the placing the electrode assembly in the accommodating cavity and electrically connecting the tab to the pole includes:
providing an adapting component, where the adapting component includes a first adapting piece and a second adapting piece that are disposed separately;
connecting the first adapting piece to the pole, connecting the second adapting piece to the tab, and placing the electrode assembly into the accommodating cavity; and
connecting the first adapting piece to the second adapting piece to electrically connect the pole to the tab.

According to a fifth aspect, this application provides a manufacturing device of battery cell, including:
a first providing module, configured to provide an integrally formed housing and a pole, where the housing includes two first side walls arranged opposite each other in a first direction and two second side walls arranged opposite each other in a second direction, the two first side walls and the two second side walls enclose an accommodating cavity, and the housing has at least one opening in a third direction;
a second providing module, configured to provide an electrode assembly, where the electrode assembly includes a body portion and a tab protruding out of the body portion; and
an assembling module, configured to dispose the pole on the first side wall, place the electrode assembly in the accommodating cavity, and electrically connect the tab of the electrode assembly to the pole.

In the invention, the manufacturing device of battery cell further includes a third providing module, where the third providing module is configured to provide an adapting component, where the adapting component includes a first adapting piece and a second adapting piece that are disposed separately, and the assembling module is further configured to connect the first adapting piece to the pole, connect the second adapting piece to the tab, and conductively connect the first adapting piece to the second adapting piece.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the examples of this application more clearly, the following briefly describes the accompanying drawings required for describing the examples of this application. Apparently, the accompanying drawings in the following descriptions show merely some examples of this application, and persons of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic three-dimensional structural diagram of a battery cell according to some embodiments of this application;
FIG. 4 is a schematic three-dimensional structural diagram of a housing of a battery cell according to some embodiments of this application;
FIG. 5 is a schematic structural vertical view of a battery cell according to some embodiments of this application;
FIG. 6 is a schematic structural cross-sectional view of the battery cell shown in FIG. 5 along a direction A-A;
FIG. 7 is a schematic diagram of a partially enlarged structure of portion M in FIG. 6;
FIG. 8 is a schematic diagram of a partially enlarged structure of portion N in FIG. 6;
FIG. 9 is a schematic three-dimensional structural diagram of an adapting component according to some embodiments of this application;
FIG. 10 is a schematic structural front view of the adapting component shown in FIG. 9;
FIG. 11 is a principle diagram of steps of a manufacturing method of battery cell according to some embodiments of this application; and
FIG. 12 is a structural diagram of a manufacturing device of battery cell according to some embodiments of this application.

The accompanying drawings are not drawn to scale.

Reference signs:
vehicle 1000;
battery 100, controller 200, motor 300;
box 10, first portion 11, second portion 12;
battery cell 20, housing 21, first side wall 211, pole mounting hole 211a, second side wall 212, opening 213, electrode assembly 22, body portion 221, tab 222, pole 23, inner pole 231, outer pole 232, sealing sleeve 233, sealing ring 234, first insulating sheet 235, second insulating sheet 236, end cover 24, adapting component 26, first adapting piece 261, first body segment 2611, first connecting segment 2612, second adapting piece 262, second body segment 2621, second connecting segment 2622;
manufacturing device 30 of battery cell, first providing module 31, second providing module 32, third providing module 33, and assembling module 34.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in this application as appropriate to specific situations.

A current battery cell typically includes a housing, an end cover, and an electrode assembly accommodated in the housing, and the housing is filled with electrolyte. The electrode assembly is a component in which electrochemical reactions take place in the battery cell. The housing is an assembly that forms the internal environment of the battery cell. The end cover is a component that covers an opening of the housing to isolate the internal environment of the battery cell from the external environment thereof. In some existing battery cells, positive and negative poles are generally arranged on a same end cover, and an arrangement direction of the pole is the same as a protruding direction of a tab of an electrode assembly. Such design makes positive and negative electrodes in the battery cell be connected only on a same side. To resolve this problem, housings of some other existing battery cells have two openings arranged opposite each other in a length direction and end covers respectively disposed on the two openings, and positive and negative poles are respectively disposed on the two end covers. The inventors of this application have found through research that, during assembling of these battery cells, an electrode assembly needs to be placed into a housing from one opening and move to another opening, causing a long moving stroke of the electrode assembly when being placed into the housing. Moreover, before the electrode assembly is placed into the housing, a tab of the electrode assembly needs to be connected to a pole on an end cover, and then the electrode assembly is placed into the housing before the end cover and the housing are welded, and therefore the assembly procedures are complicated and difficult.

To resolve the above problem of complex assembly of battery cell, the inventors have found through research that the battery cell can include an integrally formed housing, and two poles can be integrated and assembled on two opposite side walls of the housing. In this way, the electrode assembly does not need to be connected to the end cover beforehand when being placed into the housing, which facilitates placement into the housing and simplifies assembly procedures of the battery cell.

The battery cell disclosed in the embodiments of this application may be used without limitation in electric apparatuses such as vehicles, ships, or aircrafts. The battery cell, the battery, and the like disclosed in this application may be used to constitute a power supply system of such electric apparatus.

An embodiment of this application provides an electric apparatus that uses a battery as a power source. The electric apparatus may be, but is not limited to, a mobile phone, a tablet computer, a notebook computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

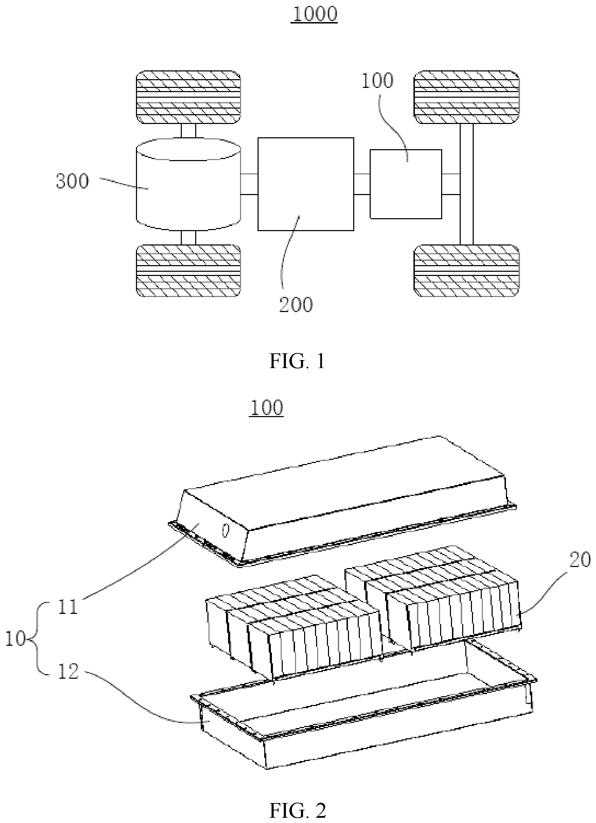

Referring to FIG. 1, FIG. 1 is a schematic structural diagram of the vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of the battery 100 according to some embodiments of this application. The battery 100 includes a box 10 and a battery cell 20. The battery cell 20 is accommodated in the box 10. The box 10 is configured to provide an accommodating space for the battery cell 20, and the box 10 may be a variety of structures. In some embodiments, the box 10 may include a first portion 11 and a second portion 12. The first portion 11 and the second portion 12 fit together to jointly define the accommodating space for accommodating the battery cell 20. The second portion 12 may be a hollow structure with one end open, and the first portion 11 may be a plate structure, where the first portion 11 covers the open side of the second portion 12 so that the first portion 11 and the second portion 12 jointly define the accommodating space. The first portion 11 and the second portion 12 may both be a hollow structure with one side open, where the open side of the first portion 11 is engaged with the open side of the second portion 12. Certainly, the box 10 formed by the first portion 11 and the second portion 12 may have a variety of shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, but is not limited thereto. The battery cell 20 may be cylindrical, flat, cuboid, or of other shapes.

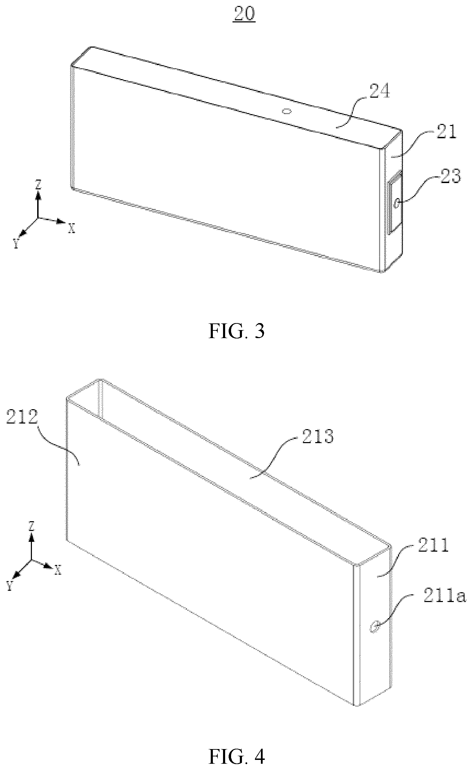

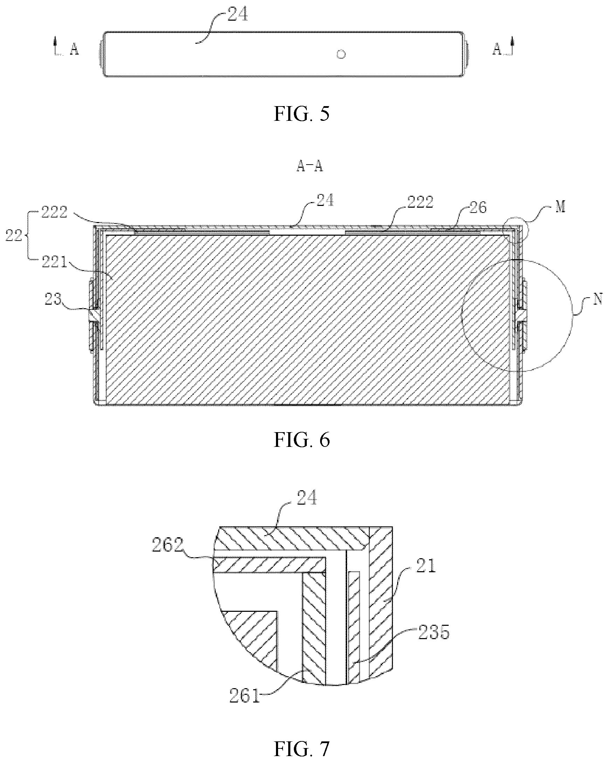

Referring to FIG. 3, FIG. 3 is a schematic three-dimensional structural diagram of the battery cell 20 according to some embodiments of this application. As shown in FIG. 3 and referring to FIG. 5, the battery cell 20 includes a housing 21, an electrode assembly 22, a pole 23, and other functional components.

The housing 21 is a component configured to form the internal environment of the battery cell 20, where the formed internal environment may be used to accommodate the electrode assembly 22, electrolyte, and other components. The housing 21 may be of various shapes and sizes, such as a rectangular shape, a cylindrical shape, and a hexagonal prism shape. Specifically, a shape of the housing 21 may be determined based on a specific shape and size of the electrode assembly 22. The housing 21 may be made of various materials, such as copper, iron, aluminum, stainless steel, aluminum alloy, and plastic, which are not particularly limited in this embodiment of this application.

The electrode assembly 22 is a component in which electrochemical reactions take place in the battery cell 20. The housing 21 may include one or more electrode assemblies 22. The electrode assembly 22 is mainly formed by winding or stacking a positive electrode plate and a negative electrode plate, and a separator is generally disposed between the positive electrode plate and the negative electrode plate. Parts of the positive electrode plate and the negative electrode plate with active substances constitute a body portion 221 of the electrode assembly, while parts of the positive electrode plate and the negative electrode plate without active substances separately constitute a tab 222. During charging and discharging of the battery, a positive electrode active substance and a negative electrode active substance react with an electrolyte, and the pole 23 is configured to be electrically connected to the electrode assembly 22 for outputting or inputting electric energy of the battery cell 20.

The end cover 24 is a component that covers an opening of the housing 21 to isolate the internal environment of the battery cell 20 from the external environment thereof. A shape of the end cover 24 is not limited and may be adapted to a shape of the housing 21 to fit the housing 21. Optionally, the end cover 24 may be made of a material (such as aluminum alloy) with specified hardness and strength, so that the end cover 24 is not prone to deform under extrusion and collision, allowing the battery cell 20 to have a higher structural strength and higher safety performance. In some embodiments, the end cover 24 may further be provided with a pressure relief mechanism for releasing internal pressure when the internal pressure or temperature of the battery cell 20 reaches a threshold. The end cover 24 may also be made of various materials, such as copper, iron, aluminum, stainless steel, aluminum alloy, plastic, which are not particularly limited in this embodiment of this application.

Referring to FIG. 3 to FIG. 6, FIG. 3 is a schematic three-dimensional structural diagram of a battery cell according to some embodiments of this application, and FIG. 4 is a schematic three-dimensional structural diagram of a housing of a battery cell according to some embodiments of this application. FIG. 5 is a schematic structural vertical view of a battery cell according to some embodiments of this application. FIG. 6 is a schematic structural cross-sectional view of the battery cell shown in FIG. 5 along a direction A-A. A battery cell 20 includes a housing 21, an electrode assembly 22, and a pole 23. The housing 21 is integrally formed and includes two first side walls 211 arranged opposite each other in a first direction X and two second side walls 212 arranged opposite each other in a second direction Y, and the two first side walls 211 and the two second side walls 212 enclose an accommodating cavity. The housing 21 has at least one opening 213 in a third direction Z, and the first direction X, the second direction Y, and the third direction Z are perpendicular to each other. The electrode assembly 22 is accommodated in the accommodating cavity, the electrode assembly 22 includes a body portion 221 and a tab 222 protruding out of the body portion 221, and the pole 23 is disposed on the first side wall 211 and electrically connected to the tab 222. In some embodiments, the electrode assembly 22 includes the body portion 221 and two tabs 222 with opposite polarities protruding out of the body portion 221. Two poles 23 are respectively disposed on the two first side walls 211 and electrically connected to the two tabs 222 respectively.

As shown in FIG. 3, the first direction X is a length direction of the battery cell 20, the second direction Y is a thickness direction of the battery cell 20, and the third direction Z is a height direction of the battery cell 20. Disposing the first side wall 211 in the first direction X means that the first side wall 211 is in an extending direction of the first direction X and the first side wall 211 is perpendicular to the first direction X. Similarly, disposing the second side wall 212 in the second direction Y means that the second side wall 212 is in an extending direction of the second direction Y and the second side wall 212 is perpendicular to the second direction Y. The opening 213 being in the third direction Z means that at least one surface of the housing 21 in the third direction Z is disposed to be open.

As shown in FIG. 4, a pole mounting hole 211a is disposed on the first side wall 211 of the housing 21, and the pole 23 is mounted at the pole mounting hole 211a. As shown in FIG. 5 and FIG. 6, two tabs 222 of the electrode assembly 22 protrude from a same side of the body portion 221. In another embodiment, the two tabs 222 of the electrode assembly 22 may also protrude from different sides of the body portion 221 respectively. For example, referring to FIG. 6, the two tabs 222 may protrude from the left and right ends of the body portion 221 respectively, which can facilitate connection of the tab 222 to the pole 23. For example, the pole 23 may be connected to the tab 222 by penetration welding or the like.

Two poles 23 are respectively disposed on the two first side walls 211 of the integrally formed housing 21. In this way, when the electrode assembly 22 is being placed into the housing, a stroke that the electrode assembly 22 needs to move is in a width direction of the housing 21, which shortens the stroke to facilitate placement into the housing. Moreover, the two poles are integrated and assembled on the two opposite side walls of the housing. In this way, the electrode assembly does not need to be connected to an end cover beforehand when being placed into the housing, which facilitates placement into the housing and simplifies assembly procedures of the battery cell. In addition, the two poles of the battery cell 20 are disposed on the two first side walls 211, so that water cooling components can be arranged on upper and lower sides of the battery cell 20, which enlarges an area for arranging the water cooling components and improves heat dissipation performance of the battery.

In some embodiments, the housing 21 is integrally formed through aluminum extrusion or drawing process.

According to some embodiments of this application, the housing 21 further includes a bottom wall disposed opposite the opening 213. The battery cell 20 further includes an end cover 24, and the end cover 24 is disposed at the opening 213 to close the accommodating cavity.

As shown in FIG. 4, an area of the first side wall 211 is smaller than an area of the second side wall 212, so that the housing 21 includes five surfaces: two larger surfaces (second side walls 212), two smaller surfaces (first side walls 211), and a bottom surface. The poles 23 are directly assembled on the two smaller surfaces of the housing 21, that is, the first side walls 211. In this way, after the electrode assembly 22 is placed in the housing 21, only one end cover 24 needs to be welded to the housing 21 to close the housing 21, which simplifies the assembly procedures of the battery cells, as compared with the prior art in which two end covers needs to be welded.

According to some embodiments of this application, the housing 21 has two openings 213 arranged opposite each other in the third direction Z, and the battery cell 20 further includes two end covers 24, where the two end covers 24 are correspondingly disposed at the two openings 213 to close the accommodating cavity.

In this case, the housing 21 has four surfaces: two larger surfaces and two smaller surfaces. The housing 21 is run through from top to bottom in the third direction Z and has two openings located in the third direction Z. The housing 21 is run through in the third direction Z, and therefore it can be formed by one-time stretching, and a stretching forming process is simple.

According to some embodiments of this application, an area of the first side wall 211 is smaller than an area of the second side wall 212. In this way, the second side wall 212 of the housing 21 and a larger surface of the electrode assembly 22 are disposed in a same direction, and the first side wall 211 of the housing 21 is disposed in a same direction as a thickness direction of the electrode assembly 22, thereby facilitating placement of the electrode assembly 22 into the housing.

According to some embodiments of this application, the pole 23 is disposed on the first side wall 211 through riveting or injection molding. As shown in FIG. 4, the pole mounting hole 211a is disposed on the first side wall 211. Before the electrode assembly 22 is placed into the housing, the poles 23 have been directly assembled on the pole mounting holes 211a of the two first side walls 211 through riveting or injection molding.

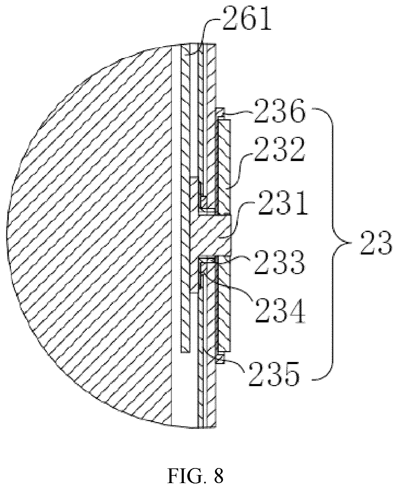

Referring to FIG. 8, the pole 23 includes an inner pole 231, an outer pole 232, a sealing sleeve 233, a sealing ring 234, a first insulating sheet 235, and a second insulating sheet 236. The inner pole 231 runs through the pole mounting hole 211a of the first side wall 211 and is partially exposed outside the first side wall 211. The outer pole 232 sleeves outside the inner pole 231. The sealing sleeve 233 sleeves outside the inner pole 231 to isolate the first side wall 211 from the inner pole 231. The sealing ring 234 is pressed against an outer wall of the sealing sleeve 233 so that an inner wall of the sealing sleeve 233 is in contact with an outer wall of the inner pole 231. The figure shows a state in which the sealing sleeve 233 is not in contact with the inner pole 231 during assembly, but after the assembly is completed, the inner wall of the sealing sleeve 233 and the outer wall of the inner pole 231 are in contact with each other. To prevent the pole 23 from being conductively connected to the housing 21, the first insulating sheet 235 is provided between the inner pole 231 and an inner wall surface of the first side wall 211 of the housing 21. Both sides of the inner pole 231 are provided with the first insulating sheet 235. The second insulating sheet 236 is provided between the outer pole 232 and an outer wall surface of the first side wall 211 of the housing 21. The second insulating sheet 236 has a groove for fastening the outer pole 232.

The sealing ring 234 may be made of fluorine rubber.

According to some embodiments of this application, as shown in FIG. 6, the tab 222 protrudes from the body portion 221 to one side of the opening 213. The battery cell 20 further includes an adapting component 26. The adapting component 26 includes a first adapting piece 261 and a second adapting piece 262 that are disposed separately. The first adapting piece 261 is configured to be connected to the pole 23, and the second adapting piece 262 is configured to be connected to the tab 222. The first adapting piece 261 substantially extends along the third direction Z, the second adapting piece 262 substantially extends along the first direction X, and the first adapting piece 261 is connected to the second adapting piece 262 through a conductive structure.

As shown in FIG. 6, the tab 222 protrudes from the body portion 221 to one side of the opening 213. The pole 23 is disposed on the first side wall 221 of the housing 21, that is, protruding directions of the tab 222 and the pole 23 are inconsistent, and therefore the tab 222 needs to be connected to the pole 23 through the adapting component 26. During the research, the inventors found that if the integrated adapting component 26 is used to connect the tab 222 and the pole 23, for example, the adapting component 26 is first connected to the tab 222, and then the electrode assembly 22 connected to the adapting component 26 is placed into the housing 21, there will be no extra space for welding the adapting component 26 and the pole 23; for another example, the adapting component 26 and the pole 23 are welded first, and the adapting component 26 prevents the electrode assembly 22 from being placed into the housing, causing the placement of electrode assembly 22 into the housing to fail. To resolve this problem, the inventors of this application propose to dispose the adapting component 26 as the first adapting piece 261 and the second adapting piece 262 that are disposed separately.

The adapting component 26 is disposed as the first adapting piece 261 and the second adapting piece 262 that are disposed separately, so that during assembly, the first adapting piece 261 may be connected to the pole 23 in advance, and after the second adapting piece 262 is connected to the tab 222 of the electrode assembly 22, the electrode assembly 22 is placed into the housing 21. In this case, end portions of the first adapting piece 261 and the second adapting piece 262 are connected through the conductive structure, thereby enabling placement of the electrode assembly 22 into the housing. After the end portions of the first adapting piece 261 and the second adapting piece 262 are connected through the conductive structure, the end cover 24 and the housing 21 are welded for completing sealing of the battery cell 20.

According to some embodiments of this application, the conductive structure includes welding structure, conductive glue bonding structure, or riveting structure. Conductive connection through the welding structure means that the first adapting piece 261 is connected to the second adapting piece 262 by welding means such as laser welding. Conductive connection through the conductive glue bonding structure means that the first adapting piece 261 are bonded with the second adapting piece 262 by using conductive glue. The conductive glue may be a conductive film, and the conductive glue can not only achieve electrical connection but also mechanical connection between the first adapting piece 261 and the second adapting piece 262. Conductive connection through the riveting structure means that the first adapting piece 261 and the second adapting piece 262 are connected to each other by using a rivet.

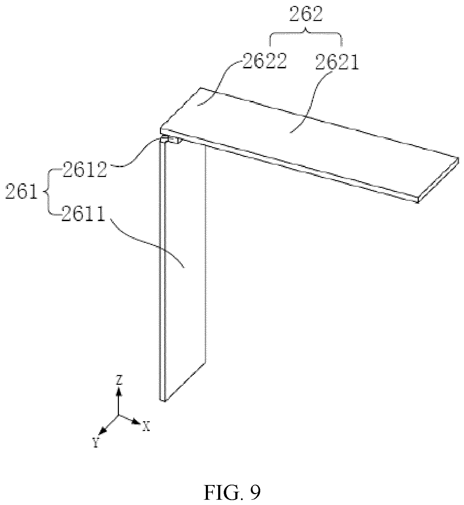

According to some embodiments of this application, as shown in FIG. 9, the first adapting piece 261 includes a first body segment 2611 and a first connecting segment 2612 disposed at an end portion of the first body segment 2611. The first body segment 2611 is configured to be connected to the pole 23, the first body segment 2611 extends along the third direction Z, the first connecting segment 2612 extends along the first direction X, and the first connecting segment 2612 is connected to the second adapting piece 262.

The first adapting piece 261 includes the first body segment 2611 and the first connecting segment 2612 disposed at the end portion of the first body segment 2611. The first connecting segment 2612 is configured to be connected to the second adapting piece 262. Therefore, a connecting area between the first adapting piece 261 and the second adapting piece 262 is increased to facilitate connection.

The first connecting segment 2612 and the first body segment 2611 are integrally formed, for example, by bending, relative to the first body segment 2611, the first connecting segment 2612 to one side by using a bending tool.

Certainly, in another embodiment, the first adapting piece 261 may also include only the first body segment 2611, and the first body segment 2611 is directly connected to the second adapting piece 262.

According to some embodiments of this application, the second adapting piece 262 includes a second body segment 2621 and a second connecting segment 2622 connected to the first connecting segment 2612, where the second body segment 2621 is configured to be connected to the tab 222, and the first connecting segment 2612 extends, relative to the first body segment 2611, toward a side approaching the second body segment 2621. Alternatively, the first connecting segment 2612 extends, relative to the first body segment 2611, toward a side leaving the second body segment 2621.

In a possible embodiment, the first connecting segment 2612 extends, relative to the first body segment 2611, toward a side approaching the second body segment 2621. In another possible embodiment, the first connecting segment 2612 extends, relative to the first body segment 2611, toward a side leaving the second body segment 2621. Cross-sections of the first adapting piece 261 in the two embodiments are both L-shaped, and the difference is that the directions in which the first connecting segment 2612 extends relative to the first body segment 2611 are opposite.

According to some embodiments of this application, in the first direction X, the first connecting segment 2612 extends toward two sides relative to the first body segment 2611. In this case, a cross-section of the first adapting piece 261 formed by the first connecting segment 2612 and the first body segment 2611 is T-shaped, which can further increase a connecting area between the first connecting segment 2612 and the second adapting piece 262.

In another embodiment, the first adapting piece 261 may also include only the first body segment 2611 disposed extending in the third direction Z. The second adapting piece 262 includes the second body segment 2621 extending in the first direction X and the second connecting segment 2622 connected to the first adapting piece 261. The second connecting segment 2622 may be disposed to be bent relative to the second body segment 2621, for example, the second connecting segment 2622 extends along the third direction Z.

According to some embodiments of this application, this application further provides a battery that includes the battery cell of any one of the foregoing solutions.

According to some embodiments of this application, this application further provides an electric apparatus that includes the battery of any one of the foregoing solutions, and the battery is configured to provide electric energy for the electric apparatus.

The electric apparatus may be any one of the foregoing devices or systems using a battery.

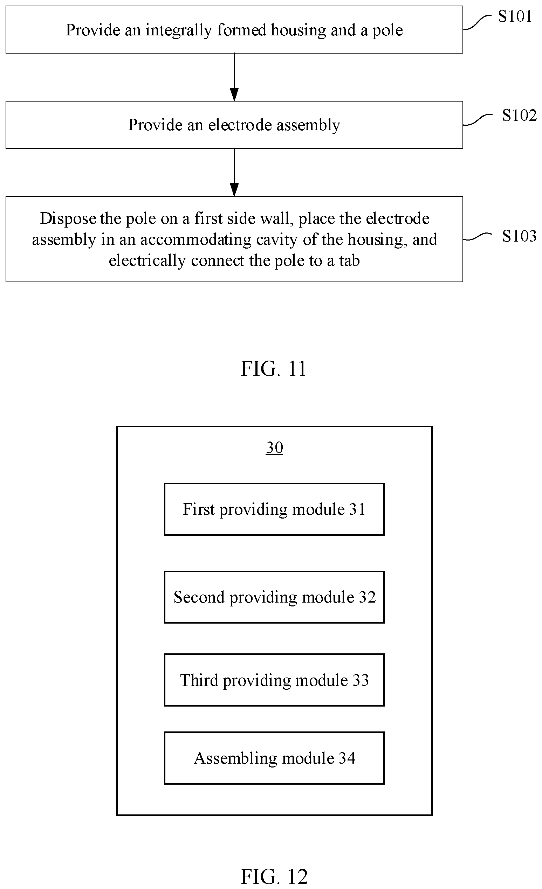

Referring to FIG. 11, according to some embodiments of this application, this application further provides a manufacturing method of battery cell, including the following steps:

S101. Provide an integrally formed housing 21 and a pole 23. The housing 21 includes two first side walls 211 arranged opposite each other in a first direction X and two second side walls 212 arranged opposite each other in a second direction Y, and the two first side walls 211 and the two second side walls 212 enclose an accommodating cavity. The housing 21 has at least one opening 213 in a third direction Z.

S102. Provide an electrode assembly 22, where the electrode assembly 22 includes a body portion 221 and a tab 222 protruding out of the body portion 221; and

S103. Dispose the pole 23 on the first side wall 211, place the electrode assembly 22 in the accommodating cavity, and electrically connect the pole 23 to the tab 222.

In the manufacturing method of battery cell, the pole 23 is disposed on the first side wall 211 of the integrally formed housing 21. In this way, the electrode assembly does not need to be connected to an end cover beforehand when being placed into the housing, which facilitates placement into the housing and simplifies assembly procedures of the battery cell.

According to some embodiments of this application, the tab 222 of the electrode assembly 22 protrudes from the body portion 221 to one side of the opening 213. The manufacturing method of battery cell further includes:
providing an adapting component 26, where the adapting component 26 includes a first adapting piece 261 and a second adapting piece 262 that are disposed separately;
connecting the first adapting piece 261 to the pole 23, and connecting the second adapting piece 262 to the tab 222; and
connecting the first adapting piece 261 that is connected to the pole 23 to the second adapting piece 262 that is connected to the tab 222.

Referring to FIG. 12, according to some embodiments of this application, this application further provides a manufacturing device 30 of battery cell. The manufacturing device includes a first providing module 31, a second providing module 32, and an assembling module 34.

The first providing module 31 is configured to provide an integrally formed housing 21 and a pole 23. The housing 21 includes two first side walls 211 arranged opposite each other in a first direction X and two second side walls 212 arranged opposite each other in a second direction Y, and the two first side walls 211 and the two second side walls 212 enclose an accommodating cavity. The housing 21 has at least one opening 213 in a third direction Z. The second providing module 32 is configured to provide an electrode assembly 22, where the electrode assembly 22 includes a body portion 221 and a tab 222 protruding out of the body portion 221. The assembling module 34 is configured to dispose the pole 23 on the first side wall 211, place the electrode assembly 22 in the accommodating cavity, and electrically connect the tab 222 of the electrode assembly 22 to the pole.

In the manufacturing device of battery cell, the pole 23 is disposed on the first side wall 211 of the integrally formed housing 21. In this way, the electrode assembly does not need to be connected to an end cover beforehand when being placed into the housing, which facilitates placement into the housing and simplifies assembly procedures of the battery cell.

According to some embodiments of this application, referring to FIG. 12, the manufacturing device 30 of battery cell further includes a third providing module 33, where the third providing module 33 is configured to provide an adapting component 26, where the adapting component 26 includes a first adapting piece 261 and a second adapting piece 262 that are disposed separately. The assembling module 33 is further configured to connect the first adapting piece 261 to the pole 23, connect the second adapting piece 262 to the tab 222, and the assembling module 33 is further configured to connect the first adapting piece 261 that is connected to the pole 23 to the second adapting piece 262 that is connected to the tab 222.

The following describes in detail a structure of a battery cell in a specific embodiment of this application according to FIG. 3 to FIG. 10.

As shown in FIG. 3, a battery cell 20 includes a housing 21, an end cover 24, and two poles 23 disposed on the housing 21. A length direction of the battery cell 20 extends along a first direction X, a thickness direction extends along a second direction Y, and a height direction extends along a third direction Z.

As shown in FIG. 4, the housing 21 includes two first side walls 211 arranged opposite each other, two second side walls 212 arranged opposite each other, a bottom wall, and an opening 213 disposed opposite the bottom wall.

As shown in FIG. 5 and FIG. 6, the battery cell 20 further includes an electrode assembly 22 disposed in the housing 21 and an adapting component 26 for connecting the electrode assembly 22 to the pole 23. The electrode assembly 22 includes a body portion 221 and two tabs 222 protruding from the body portion 221 to one side of the opening. The two tabs 222 have opposite polarities. One is a positive tab and the other is a negative tab. Each of the tabs 222 is connected to a corresponding pole 23 through one adapting component 26.

In another embodiment, the battery cell 20 includes two or more electrode assemblies 22. Positive tabs of the two or more electrode assemblies 22 can be connected to corresponding positive poles through one adapting component, and negative tabs of the two or more electrode assemblies 22 can be connected to corresponding negative poles through another adapting component.

As shown in FIG. 7, the adapting component 26 includes a first adapting piece 261 and a second adapting piece 262 that are disposed separately. The first adapting piece 261 and the second adapting piece 262 are arranged perpendicular to each other, the first adapting piece 261 is disposed on an inner side of the first side wall 211 of the housing 21 and connected to the pole 23, and the second adapting piece 262 is disposed on an inner side of an end cover 24 and connected to the tab 222.

As shown in FIG. 8, the pole 23 includes an inner pole 231, an outer pole 232, a sealing sleeve 233, a sealing ring 234, a first insulating sheet 235, and a second insulating sheet 236.

An inner pole 231 includes a pole body disposed in a pole mounting hole 211a and an adapting piece for connecting to the first adapting piece 261. The adapting piece is connected to an end portion of the pole body. The sealing sleeve 233 sleeves outside the inner pole 231 to isolate the first side wall 211 from the inner pole 231. The sealing ring 234 is pressed against an outer wall of the sealing sleeve 233 so that an inner wall of the sealing sleeve 233 is in contact with an outer wall of the inner pole 231. The figure shows a state in which the sealing sleeve 233 is not in contact with the inner pole 231 during assembly, but after the assembly is completed, the inner wall of the sealing sleeve 233 and the outer wall of the inner pole 231 are in contact with each other. To prevent the pole 23 from being conductively connected to the housing 21, the first insulating sheet 235 is provided between the adapting piece of the inner pole 231 and an inner wall surface of the first side wall 211 of the housing 21. The first insulating sheet 235 extends along the third direction Z and extends to a position close to the end cover 24. In this way, the first insulating sheet 235 can not only prevent the inner pole 231 from being conductively connected to the housing 21, but also prevent the first adapting piece 261 from being conductively connected to the housing.

As shown in FIG. 8, the pole body runs through the pole mounting hole 211a of the first side wall 211 and is partially exposed outside the first side wall 211. An outer pole 232 is a pole ring with an inner hole. The outer pole 232 sleeves outside the inner pole 231. The second insulating sheet 236 is provided between the outer pole 232 and an outer wall surface of the first side wall 211 of the housing 21. The second insulating sheet 236 has a groove for fastening the outer pole 232.

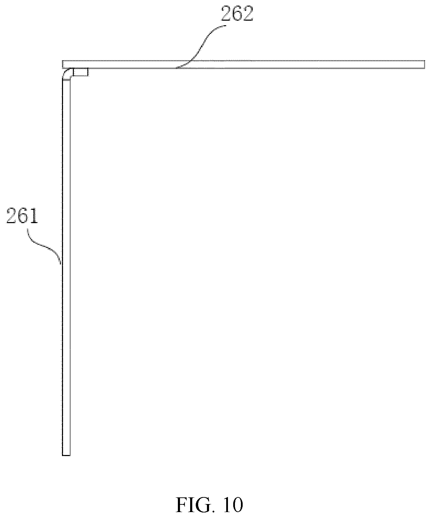

As shown in FIG. 9 and FIG. 10, the adapting component 26 includes the first adapting piece 261 and the second adapting piece 262 that are disposed separately. The first adapting piece 261 is configured to be connected to the pole 23, and the second adapting piece 262 is configured to be connected to the tab 222. The first adapting piece 261 includes a first body segment 2611 extending in the third direction Z and a first connecting segment 2612 extending in the first direction X. The second adapting piece 262 includes a second body segment 2621 disposed extending in the first direction X and a second connecting segment 2622. The first body segment 2611 is connected to the pole 23, and the first connecting segment 2612 is connected to the second adapting piece 262.

A manufacturing method of the battery cell 20 in this embodiment includes providing the integrally formed housing 21, two poles 23, the electrode assembly 22, two adapting components 26, and the end cover 24, assembling the two poles 23 on the first side wall 211 of the housing 21, and connecting (for example, through welding) the first adapting piece 261 of one of the adapting components 26 to one of the poles 23, and specifically, the first adapting piece 261 is connected to the inner pole 231; and welding (for example, through ultrasonic welding or laser welding) the second adapting piece 262 of one of the adapting components 26 to one tab 222, placing the electrode assembly 22 welded to the second adapting piece 262 into the housing 21, and conductively connecting the first adapting piece 261 to an end portion of the second adapting piece 262, thereby completing conductive connection between one pole 23 and one tab 222. The other pole 23 and tab 222 are connected in the same manner. Finally, the end cover 24 is welded to the housing 21 to seal the battery cell 20.

Insulation treatment is further required to be performed between the electrode assembly 22 and the housing 21, for example, wrapping by using an insulating film or a blue film made of Mylar (Mylar).

## Claims

1. A battery cell (20), comprising:
a housing (21), integrally formed and comprising two first side walls (211) arranged opposite each other in a first direction (X) and two second side walls (212) arranged opposite each other in a second direction (Y), wherein the two first side walls (211) and the two second side walls (212) enclose an accommodating cavity, the housing (21) has at least one opening (213) in a third direction (Z), and the first direction (X), the second direction (Y), and the third direction (Z) are perpendicular to each other;
an electrode assembly (22), accommodated in the accommodating cavity and comprising a body portion (221) and a tab (222) protruding out of the body portion (221); and
a pole (23), wherein the pole (23) is disposed on the first side wall (211) and electrically connected to the tab (222),
**characterized in that**:
the tab (222) protrudes from the body portion (221) to one side of the opening (213), and the battery cell (20) further comprises an adapting component (26), wherein the adapting component (26) comprises a first adapting piece (261) and a second adapting piece (262) that are disposed separately, the first adapting piece (261) is configured to be connected to the pole (23), the second adapting piece (262) is configured to be connected to the tab (222), the first adapting piece (261) substantially extends along the third direction (Z), the second adapting piece (262) substantially extends along the first direction (X), and the first adapting piece (261) is connected to the second adapting piece (262) through a conductive structure.

2. The battery cell (20) according to claim 1, wherein the housing (21) further comprises a bottom wall disposed opposite the opening (213), and the battery cell (20) further comprises an end cover (24), wherein the end cover (24) is disposed at the opening (213) to close the accommodating cavity.

3. The battery cell (20) according to claim 1, wherein the housing (21) has two openings (213) arranged opposite each other in the third direction (Z), and the battery cell (20) further comprises two end covers (24), wherein the two end covers (24) are correspondingly disposed at the two openings (213) to close the accommodating cavity.

4. The battery cell (20) according to any one of claims 1 to 3, wherein the pole (23) is disposed on the first side wall (211) through riveting or injection molding.

5. The battery cell (20) according to any one of the preceding claims, wherein the first adapting piece (261) comprises a first body segment (2611) and a first connecting segment (2612) disposed at an end portion of the first body segment (2611), wherein the first body segment (2611) is configured to be connected to the pole (23), the first body segment (2611) extends along the third direction (Z), the first connecting segment (2612) extends along the first direction (X), and the first connecting segment (2612) is connected to the second adapting piece (262).

6. The battery cell (20) according to claim 5, wherein the second adapting piece (262) comprises a second body segment (2621) and a second connecting segment (2622) connected to the first connecting segment (2612), wherein the second body segment (2621) is configured to be connected to the tab (222), and the first connecting segment (2612) extends, relative to the first body segment (2611), toward a side approaching the second body segment (2621); or the first connecting segment (2612) extends, relative to the first body segment (2611), toward a side leaving the second body segment (2621); or in the first direction (X), the first connecting segment (2612) extends toward two sides relative to the first body segment (2611).

7. A battery (100), comprising the battery cell (20) according to any one of claims 1 to 6.

8. An electric apparatus, comprising the battery (100) according to claim 7.

9. A manufacturing method of battery cell, comprising the following steps:
providing (S101) an integrally formed housing (21) and a pole (23), wherein the housing (21) comprises two first side walls (211) arranged opposite each other in a first direction (X) and two second side walls (212) arranged opposite each other in a second direction (Y), wherein the two first side walls (211) and the two second side walls (212) enclose an accommodating cavity, and the housing (21) has at least one opening (213) in a third direction (Z);
providing (S102) an electrode assembly (22), wherein the electrode assembly (22) comprises a body portion (221) and a tab (222) protruding out of the body portion (221); and
disposing (S103) the pole (23) on the first side wall (211), placing the electrode assembly (22) in the accommodating cavity, and electrically connecting the tab (222) to the pole (23),
**characterized in that**:
the tab (222) of the electrode assembly (22) protrudes from the body portion (221) to one side of the opening (213), and the placing the electrode assembly (22) in the accommodating cavity and electrically connecting the tab (222) to the pole (23) comprises:
providing an adapting component (26), wherein the adapting component (26) comprises a first adapting piece (261) and a second adapting piece (262) that are disposed separately;
connecting the first adapting piece (261) to the pole (23), connecting the second adapting piece (262) to the tab (222), and placing the electrode assembly (22) into the accommodating cavity; and
connecting the first adapting piece (261) to the second adapting piece (262) to electrically connect the pole (23) to the tab (222).

10. A manufacturing device (30) of battery cell, comprising:
a first providing module (31), configured to provide an integrally formed housing (21) and a pole (23), wherein the housing (21) comprises two first side walls (211) arranged opposite each other in a first direction (X) and two second side walls (212) arranged opposite each other in a second direction (Y), the two first side walls (211) and the two second side walls (212) enclose an accommodating cavity, and the housing (21) has at least one opening (213) in a third direction (Z);
a second providing module (32), configured to provide an electrode assembly (22), wherein the electrode assembly (22) comprises a body portion (221) and a tab (222) protruding out of the body portion (221); and
an assembling module (34), configured to dispose the pole (23) on the first side wall (211), place the electrode assembly (22) in the accommodating cavity, and electrically connect the tab (222) of the electrode assembly (22) to the pole (23),
**characterized in that**:
the manufacturing device (30) of battery cell further comprises a third providing module (33), wherein the third providing module (33) is configured to provide an adapting component (26), wherein the adapting component (26) comprises a first adapting piece (261) and a second adapting piece (262) that are disposed separately, and the assembling module (34) is further configured to connect the first adapting piece (261) to the pole (23), connect the second adapting piece (262) to the tab (222), and conductively connect the first adapting piece (261) to the second adapting piece (262).

## Patentansprüche

1. Batteriezelle (20), umfassend:
ein Gehäuse (21), das einstückig ausgebildet ist und umfassend zwei erste Seitenwände (211), die einander gegenüberliegend in einer ersten Richtung (X) angeordnet sind, und zwei zweite Seitenwände (212), die einander gegenüberliegend in einer zweiten Richtung (Y) angeordnet sind, wobei die zwei ersten Seitenwände (211) und die zwei zweiten Seitenwände (212) einen Aufnahmehohlraum einschließen, wobei das Gehäuse (21) mindestens eine Öffnung (213) in einer dritten Richtung (Z) aufweist, und die erste Richtung (X), die zweite Richtung (Y) und die dritte Richtung (Z) senkrecht zueinander stehen;
eine Elektrodenanordnung (22), die in dem Aufnahmehohlraum aufgenommen wird und umfassend einen Körperabschnitt (221) und eine Lasche (222), die aus dem Körperabschnitt (221) hervorsteht; und
einen Pol (23), wobei der Pol (23) an der ersten Seitenwand (211) angeordnet ist und elektrisch mit der Lasche (222) verbunden ist,
**dadurch gekennzeichnet, dass**:
die Lasche (222) aus dem Körperabschnitt (221) zu einer Seite der Öffnung (213) hervorsteht, und die Batteriezelle (20) ferner eine Anpassungskomponente (26) umfasst, wobei die Anpassungskomponente (26) ein erstes Anpassungsstück (261) und ein zweites Anpassungsstück (262) umfasst, die getrennt angeordnet sind, wobei das erste Anpassungsstück (261) dazu konfiguriert ist, mit dem Pol (23) verbunden zu werden, das zweite Anpassungsstück (262) dazu konfiguriert ist, mit der Lasche (222) verbunden zu werden, das erste Anpassungsstück (261) sich im Wesentlichen entlang der dritten Richtung (Z) erstreckt, das zweite Anpassungsstück (262) sich im Wesentlichen entlang der ersten Richtung (X) erstreckt, und das erste Anpassungsstück (261) mit dem zweiten Anpassungsstück (262) durch eine leitende Struktur verbunden ist.

2. Batteriezelle (20) nach Anspruch 1, wobei das Gehäuse (21) ferner eine Bodenwand umfasst, die gegenüber der Öffnung (213) angeordnet ist, und die Batteriezelle (20) ferner eine Endabdeckung (24) umfasst, wobei die Endabdeckung (24) an der Öffnung (213) angeordnet ist, um den Aufnahmehohlraum zu schließen.

3. Batteriezelle (20) nach Anspruch 1, wobei das Gehäuse (21) zwei Öffnungen (213) aufweist, die einander gegenüberliegend in der dritten Richtung (Z) angeordnet sind, und die Batteriezelle (20) ferner zwei Endabdeckungen (24) umfasst, wobei die zwei Endabdeckungen (24) entsprechend an den beiden Öffnungen (213) angeordnet sind, um den Aufnahmehohlraum zu schließen.

4. Batteriezelle (20) nach einem der Ansprüche 1 bis 3, wobei der Pol (23) durch Nieten oder Spritzgießen an der ersten Seitenwand (211) angeordnet ist.

5. Batteriezelle (20) nach einem der vorhergehenden Ansprüche, wobei das erste Anpassungsstück (261) ein erstes Körpersegment (2611) und ein erstes Verbindungssegment (2612) umfasst, das an einem Endabschnitt des ersten Körpersegments (2611) angeordnet ist, wobei das erste Körpersegment (2611) dazu konfiguriert ist, mit dem Pol (23) verbunden zu werden, wobei das erste Körpersegment (2611) sich entlang der dritten Richtung (Z) erstreckt, das erste Verbindungssegment (2612) sich entlang der ersten Richtung (X) erstreckt und das erste Verbindungssegment (2612) mit dem zweiten Anpassungsstück (262) verbunden ist.

6. Batteriezelle (20) nach Anspruch 5, wobei das zweite Anpassungsstück (262) ein zweites Körpersegment (2621) und ein zweites Verbindungssegment (2622) umfasst, das mit dem ersten Verbindungssegment (2612) verbunden ist, wobei das zweite Körpersegment (2621) dazu konfiguriert ist, mit der Lasche (222) verbunden zu werden und wobei das erste Verbindungssegment (2612) sich in Bezug auf das erste Körpersegment (2611) zu einer Seite erstreckt, die sich dem zweiten Körpersegment (2621) nähe kommt; oder wobei das erste Verbindungssegment (2612) sich in Bezug auf das erste Körpersegment (2611) zu einer Seite, die das zweite Körpersegment (2621) verlässt; oder in der ersten Richtung (X) erstreckt, wobei das erste Verbindungssegment (2612) sich zu zwei Seiten in Bezug auf das erste Körpersegment (2611) erstreckt.

7. Batterie (100), umfassend die Batteriezelle (20) nach einem der Ansprüche 1 bis 6.

8. Elektrisches Gerät, umfassend die Batterie (100) nach Anspruch 7.

9. Verfahren zur Herstellung einer Batteriezelle, umfassend die folgenden Schritte:
Bereitstellen (S101) eines einstückig ausgebildeten Gehäuses (21) und einem Pol (23), wobei das Gehäuse (21) zwei erste Seitenwände (211), die einander gegenüberliegend in einer ersten Richtung (X) angeordnet sind, und zwei zweite Seitenwände (212), die einander gegenüberliegend in einer zweiten Richtung (Y) angeordnet sind, umfasst, wobei die zwei ersten Seitenwände (211) und die zwei zweiten Seitenwände (212) einen Aufnahmehohlraum einschließen, und das Gehäuse (21) mindestens eine Öffnung (213) in einer dritten Richtung (Z) aufweist;
Bereitstellen (S102) einer Elektrodenanordnung (22), wobei die Elektrodenanordnung (22) einen Körperabschnitt (221) und eine Lasche (222) umfasst, die aus dem Körperabschnitt hervorsteht; und
Anordnen (S103) des Pols (23) an der ersten Seitenwand (211), Platzieren der Elektrodenanordnung (22) in dem Aufnahmehohlraum und Verbinden elektrisch der Lasche (222) mit dem Pol (23), **dadurch gekennzeichnet, dass**:
die Lasche (222) der Elektrodenanordnung (22) aus dem Körperabschnitt (221) zu einer Seite der Öffnung (213) hervorsteht, und das Anordnen der Elektrodenanordnung (22) in dem Aufnahmehohlraum und das Verbinden elektrisch der Lasche (222) mit dem Pol (23) umfasst:
Bereitstellen einer Anpassungskomponente (26), wobei die Anpassungskomponente (26) ein erstes Anpassungsstück (261) und ein zweites Anpassungsstück (262) umfasst, die getrennt angeordnet sind;
Verbinden des ersten Anpassungsstücks (261) mit dem Pol (23), Verbinden des zweiten Anpassungsstücks (262) mit der Lasche (222) und Platzieren der Elektrodenanordnung (22) in den Aufnahmehohlraum; und
Verbinden des ersten Anpassungsstücks (261) mit dem zweiten Anpassungsstück (262), um den Pol (23) elektrisch mit der Lasche (222) zu verbinden.

10. Herstellungsvorrichtung (30) einer Batteriezelle, umfassend:
ein erstes Bereitstellungsmodul (31), das dazu konfiguriert ist, ein einstückig ausgebildetes Gehäuse (21) und einen Pol (23) bereitzustellen, wobei das Gehäuse (21) zwei erste Seitenwände (211), die einander gegenüberliegend in einer ersten Richtung (X) angeordnet sind, und zwei zweite Seitenwände (212), die einander gegenüberliegend in einer zweiten Richtung (Y) angeordnet sind, umfasst, wobei die zwei ersten Seitenwände (211) und die zwei zweiten Seitenwände (212) einen Aufnahmehohlraum einschließen, und das Gehäuse (21) mindestens eine Öffnung (213) in einer dritten Richtung (Z) aufweist;
ein zweites Bereitstellungsmodul (32), das dazu konfiguriert ist, eine Elektrodenanordnung (22) bereitzustellen, wobei die Elektrodenanordnung (22) einen Körperabschnitt (221) und eine Lasche (222), die aus dem Körperabschnitt (221) hervorsteht, umfasst; und
ein Montagemodul (34), das dazu konfiguriert ist, den Pol (23) an der ersten Seitenwand (211) anzuordnen, die Elektrodenanordnung (22) in dem Aufnahmehohlraum zu platzieren und die Lasche (222) der Elektrodenanordnung (22) mit dem Pol (23) elektrisch zu verbinden,
**dadurch gekennzeichnet, dass**:
die Herstellungsvorrichtung (30) der Batteriezelle ferner ein drittes Bereitstellungsmodul (33) umfasst, wobei das dritte Bereitstellungsmodul (33) dazu konfiguriert ist, eine Anpassungskomponente (26) bereitzustellen, wobei die Anpassungskomponente (26) ein erstes Anpassungsstück (261) und ein zweites Anpassungsstück (262) umfasst, die getrennt angeordnet sind, und das Montagemodul (34) ferner dazu konfiguriert ist, das erste Anpassungsstück (261) mit dem Pol (23) zu verbinden, das zweite Anpassungsstück (262) mit der Lasche (222) zu verbinden und das erste Anpassungsstück (261) mit dem zweiten Anpassungsstück (262) leitfähig zu verbinden.

## Revendications

1. Elément de batterie (20), comprenant :
un boîtier (21), formé intégralement et comprenant deux premières parois latérales (211) disposées à l'opposé l'une de l'autre dans une première direction (X) et deux secondes parois latérales (212) disposées à l'opposé l'une de l'autre dans une deuxième direction (Y), dans lequel les deux premières parois latérales (211) et les deux secondes parois latérales (212) entourent une cavité de logement, le boîtier (21) a au moins une ouverture (213) dans une troisième direction (Z), et la première direction (X), la deuxième direction (Y) et la troisième direction (Z) sont perpendiculaires l'une par rapport à l'autre ;
un ensemble électrodes (22), logé dans la cavité de logement et comprenant une partie de corps (221) et une languette (222) faisant saillie hors de la partie de corps (221) ; et
un pôle (23), dans lequel le pôle (23) est disposé sur la première paroi latérale (211) et connecté électriquement à la languette (222),
**caractérisé en ce que** :
la languette (222) fait saillie de la partie du corps (221) d'un côté de l'ouverture (213), et l'élément de batterie (20) comprend en outre un composant d'adaptation (26), dans lequel le composant d'adaptation (26) comprend une première pièce d'adaptation (261) et une deuxième pièce d'adaptation (262) qui sont disposées séparément, la première pièce d'adaptation (261) est configurée pour être connectée au pôle (23), la seconde pièce d'adaptation (262) est configurée pour être reliée à la languette (222), la première pièce d'adaptation (261) s'étend sensiblement suivant la troisième direction (Z), la seconde pièce d'adaptation (262) s'étend sensiblement suivant la première direction (X), et la première pièce d'adaptation (261) est reliée à la seconde pièce d'adaptation (262) par l'intermédiaire d'une structure conductrice.

2. Elément de batterie (20) selon la revendication 1, dans lequel le boîtier (21) comprend en outre une paroi inférieure disposée à l'opposé de l'ouverture (213), et l'élément de batterie (20) comprend en outre un couvercle d'extrémité (24), dans lequel le couvercle d'extrémité (24) est disposé au niveau de l'ouverture (213) pour fermer la cavité de logement.

3. Elément de batterie (20) selon la revendication 1, dans lequel le boîtier (21) a deux ouvertures (213) disposées à l'opposé l'une de l'autre dans la troisième direction (Z), et l'élément de batterie (20) comprend en outre deux couvercles d'extrémité (24), dans lequel les deux couvercles d'extrémité (24) sont disposés de manière correspondante au niveau des deux ouvertures (213) pour fermer la cavité de logement.

4. Elément de batterie (20) selon l'une quelconque des revendications 1 à 3, dans lequel le pôle (23) est disposé sur la première paroi latérale (211) par rivetage ou moulage par injection.

5. Elément de batterie (20) selon l'une quelconque des revendications précédentes, dans lequel la première pièce d'adaptation (261) comprend un premier segment de corps (2611) et un premier segment de connexion (2612) disposé au niveau d'une partie d'extrémité du premier segment de corps (2611), dans lequel le premier segment de corps (2611) est configuré pour être connecté au pôle (23), le premier segment de corps (2611) s'étend suivant la troisième direction (Z), le premier segment de connexion (2612) s'étend suivant la première direction (X), et le premier segment de connexion (2612) est connecté à la seconde pièce d'adaptation (262).

6. Elément de batterie (20) selon la revendication 5, dans lequel la seconde pièce d'adaptation (262) comprend un second segment de corps (2621) et un second segment de connexion (2622) connecté au premier segment de connexion (2612), dans lequel le second segment de corps (2621) est configuré pour être connecté à la languette (222), et le premier segment de connexion (2612) s'étend, par rapport au premier segment de corps (2611), vers un côté approchant le second segment de corps (2621) ; ou le premier segment de connexion (2612) s'étend, par rapport au premier segment de corps (2611), vers un côté quittant le second segment de corps (2621) ; ou dans la première direction (X), le premier segment de connexion (2612) s'étend vers deux côtés par rapport au premier segment de corps (2611).

7. Batterie (100), comprenant l'élément de batterie (20) selon l'une quelconque des revendications 1 à 6.

8. Appareil électrique comprenant la batterie (100) selon la revendication 7.

9. Procédé de fabrication d'un élément de batterie, comprenant les étapes suivantes :
la fourniture (S101) d'un boîtier (21) formé intégralement et d'un pôle (23), dans lequel le boîtier (21) comprend deux premières parois latérales (211) disposées à l'opposé l'une de l'autre dans une première direction (X) et deux secondes parois latérales (212) disposées à l'opposé l'une de l'autre dans une deuxième direction (Y), dans lequel les deux premières parois latérales (211) et les deux secondes parois latérales (212) entourent une cavité de logement, et le boîtier (21) a au moins une ouverture (213) dans une troisième direction (Z) ;
la fourniture (S102) d'un ensemble électrodes (22), dans lequel l'ensemble électrodes (22) comprend une partie de corps (221) et une languette (222) faisant saillie hors de la partie de corps (221) ; et
la disposition (S103) du pôle (23) sur la première paroi latérale (211), le placement de l'ensemble électrodes (22) dans la cavité de logement et la connexion électrique de la languette (222) au pôle (23),
**caractérisé en ce que** :
la languette (222) de l'ensemble d'électrodes (22) fait saillie de la partie du corps (221) d'un côté de l'ouverture (213), et le placement de l'ensemble d'électrodes (22) dans la cavité de logement et la connexion électrique de la languette (222) au pôle (23) comprend :
la fourniture d'un composant d'adaptation (26), dans lequel le composant d'adaptation (26) comprend une première pièce d'adaptation (261) et une seconde pièce d'adaptation (262) qui sont disposées séparément ;
la connexion de la première pièce d'adaptation (261) au pôle (23), la connexion de la seconde pièce d'adaptation (262) à la languette (222), et la placement de l'assemblage électrodes (22) dans la cavité de logement ; et
la connexion de la première pièce d'adaptation (261) à la seconde pièce d'adaptation (262) pour connecter électriquement le pôle (23) à la languette (222).

10. Dispositif de fabrication (30) d'un élément de batterie, comprenant :
un premier module de fourniture (31), configuré pour fournir un boîtier (21) formé intégralement et un pôle (23), dans lequel le boîtier (21) comprend deux premières parois latérales (211) disposées à l'opposé l'une de l'autre dans une première direction (X) et deux secondes parois latérales (212) disposées à l'opposé l'une de l'autre dans une deuxième direction (Y), dans lequel les deux premières parois latérales (211) et les deux secondes parois latérales (212) entourent une cavité de logement, et le boîtier (21) a au moins une ouverture (213) dans une troisième direction (Z) ;
un deuxième module de fourniture (32), configuré pour fournir un ensemble électrodes (22), dans lequel l'ensemble électrodes (22) comprend une partie de corps (221) et une languette (222) faisant saillie hors de la partie de corps (221) ; et
un module d'assemblage (34), configuré pour disposer le pôle (23) sur la première paroi latérale (211), placer l'ensemble électrodes (22) dans la cavité de logement et connecter électriquement la languette (222) de l'ensemble électrodes (22) au pôle (23),
**caractérisé en ce que** :
le dispositif de fabrication (30) de l'élément de batterie comprend en outre un troisième module de fourniture (33), dans lequel le troisième module de fourniture (33) est configuré pour fournir un composant d'adaptation (26), dans lequel le composant d'adaptation (26) comprend une première pièce d'adaptation (261) et une seconde pièce d'adaptation (262) qui sont disposées séparément, et le module d'assemblage (34) est en outre configuré pour connecter la première pièce d'adaptation (261) au pôle (23), connecter la seconde pièce d'adaptation (262) à la languette (222), et connecter de manière conductrice la première pièce d'adaptation (261) à la seconde pièce d'adaptation (262).
